# EUROPEAN PATENT SPECIFICATION

(11) **EP 4 004 470 B1**
(45) Date of publication and mention of the grant of the patent: **17.01.2024**
(21) Application number: 20757167.0
(22) Date of filing: 31.07.2020
(51) Int. Cl.: F28D 1/03, F28F 3/12, H01M 10/65, F28F 9/02

(54) **HEAT EXCHANGE PANEL**
WÄRMETAUSCHERTAFEL
PANNEAU D'ÉCHANGE DE CHALEUR

(30) Priority: 31.07.2019 US 201962880942 P; 13.02.2020 US 202062975884 P
(43) Date of publication of application: 01.06.2022
(73) Proprietor: Zephyros, Inc., Romeo, MI 48065 (US)
(72) Inventor: CATE, Peter, 67129 Molsheim Cedex (FR)
(74) Representative: Kutzenberger Wolff & Partner
(86) International application number: PCT/US2020/044383
(87) International publication number: WO 2021/022104

(56) References cited:
- EP-A1- 2 945 219
- DE-A1-102012 217 869
- US-A- 5 836 383
- US-A1- 2015 034 287
- US-A1- 2018 205 125

## Description

### FIELD

The present invention generally relates to a heat exchange assembly, and more particularly, to a multi-layered heat exchange assembly. Document US 2015/034287 A1, which can be considered as the closest prior art, discloses a heat exchange assembly comprising two or more panels; a plurality of channels formed between the two or more panels; and a reservoir.

### BACKGROUND

Electronic and power equipment are often required for various tasks throughout many industries. This electronic and power equipment often times generates high energy, excess heat, or both during continuous operation. For example, one particular industry is the automotive industry where many vehicles, such as electric vehicles, require rechargeable batteries to power the vehicles. However, these batteries often generate significantly high heat during operation which may in turn alter the performance of the batteries or even prevent the batteries from operating successfully. As a result, attempts have been made to provide cooling systems or heat exchange assemblies to maintain a desired temperature of the batteries near or slightly above room temperature.

One particularly common solution implemented in various vehicles is a heat exchange system in which a coolant flows through a housing in contact with a battery to draw the excess heat from the battery. The excess heat is then transferred through the coolant and expelled along an opposing surface of the heat exchange system not in contact with the battery. It is also possible that a refrigerant may be utilized in conjunction with an on-board air-conditioning circuit. These solutions allow the system to cool or heat the battery to the desired temperature as required. However, heat exchange systems often require structurally rigid metal materials to function properly. These metals often requiring excess manufacturing time, cost, or both. Additionally, the heat exchange systems often require a complicated internal core within a housing that directs or diverts the coolant during use. These internal cores are frequently complicated to manufacture, are heavy, are expensive, or a combination thereof. Furthermore, most existing heat exchangers are susceptible to impact damage and offer little benefit in terms of battery impact protection.

Examples of heat exchange systems can be found in U.S. Patent Nos. 5,971,290; 6,124,644; 8,603,660; 9,225,045; 10,035,401; and 10,224,584; and U.S. Patent Publication Nos. 2011/0269008; 2017/0025721; and 2019/0031944. There remains a need for a lightweight, cost-effective heat exchange assembly that can also protect the battery from external impact. What is needed is a heat exchange system having one or more metallic layers in combination with secondary components to direct coolant flow. There remains a need for a customizable heat exchange system. What is needed is a heat exchange assembly having a customizable and tunable channel pattern to direct a coolant temperature control material or other temperature control material. There remains a need for a heat exchange system that cools or heats one or more components while also providing structural rigidity and impact protection. What is needed is a heat exchange assembly that also provides structural reinforcement.

### SUMMARY

The present teachings meet one or more of the present needs by providing a heat exchange assembly according to claim 1.

The present teachings meet one or more of the present needs by providing a heat exchange assembly comprising: a metallic or polymeric core disposed between the two or more panels, wherein a plurality of projections, domes or other geometries form the plurality of channels; an adhesive material disposed between the two or more panels that forms the plurality of channels as well as providing a structural joint between the layers; a plurality of side walls that abut terminal edges of the two or more panels to form a housing around the plurality of channels; a second reservoir, wherein the reservoirs are positioned on opposing ends of the plurality of channels so that the temperature control material flows between the reservoirs through the plurality of channels; or a combination thereof.

A first panel may be metallic and a second panel may be metallic or polymeric. The reservoir may include an opening that abuts the plurality of channels so that the flow path of the temperature control material moves from the reservoir, through the opening, and into the plurality of channels, or vice versa. The flow path of the temperature control material may loop through the plurality of channels in a snake-like pattern. The flow path of the temperature control material may flow through the plurality of channels in a substantially parallel and simultaneous manner. The flow path of the temperature control material may be substantially random. The adhesive is a foamable material applied in a desirable pattern for one or more of joining the panels and directing coolant. The two or more panels are spaced apart by a thickness of the adhesive after assembly and foaming. The two or more panels may include a coating to protect from galvanic or other types of corrosion. The two or more panels may include a top panel, a bottom panel, and an intermediate panel. The plurality of channels may be disposed between both the top panel and intermediate panel, and the intermediate panel and the bottom panel. The temperature control material may be polyethylene glycol, air, refrigerant, water, alcohol, phase change material or a combination of these. The core may be a formed aluminum or other metal. At least one of the two or more panels may be permeable. One or more reservoirs may be positioned on opposing ends of the plurality of channels so that the temperature control material flows between the reservoirs through the plurality of channels. The plurality of channels may be formed via a plurality of projections extending between the two or more panels. The adhesive may remain structurally intact between -40 °C and at least 80 °C. The heat exchange assembly may be incorporated into an automotive battery housing. The two or more panels may be spaced apart via one or more spacers to create a desired gap between the two or more panels. The opening of the reservoir may include one or more reinforcement struts that maintain a structure of the opening; or a combination thereof.

The assembly may include a heating element. The plurality of channels may include a heating element. The assembly may include a heating element and the heating element comprises one or more resistive wires. The assembly may include an induction heating component. The assembly may be substantially free of any adhesive material.

The present teachings meet one or more of the present needs by providing a lightweight, structural and impact resistant heat exchange assembly; a heat exchange system having one or more metallic and/or polymeric layers; a customizable heat exchange system; a heat exchange assembly having a customizable and tunable channel pattern to direct a coolant temperature control material; a need for a heat exchange system that cools or heats one or more components while also providing structural rigidity; a heat exchange assembly that provides structural reinforcement; or a combination thereof.

### DESCRIPTION OF THE DRAWINGS

FIG. 1 is an exploded perspective view of a panel assembly;
FIG. 2 is an exploded perspective view of a panel assembly free of a core;
FIG. 3A is a top view of a panel assembly illustrating a loop flow path of a temperature control material;
FIG. 3B is a top view of a panel assembly illustrating a parallel flow path of a temperature control material;
FIG. 3C is a top view of a panel assembly illustrating a random flow path of a temperature control material; and
FIG. 4 is a cross-sectional view of a panel assembly illustrating a flow path of a temperature control material.

### DETAILED DESCRIPTION

The teachings herein are directed toward a heat exchange assembly. The heat exchange assembly may function to decrease or increase a temperature of one or more components by transferring heat from the one or more components through the heat exchange assembly. The heat exchange assembly may abut one or more surfaces of a component being cooled or heated. The heat exchange assembly may support the component being cooled or heated. For example, the heat exchange assembly may be integrated into a battery housing that supports or encloses a battery of a vehicle. The heat exchange assembly may include one or more layers, one or more coolants, one or more housings, or a combination thereof. The heat exchange assembly may include one or more circulating temperature control materials. The temperature control materials may circulate through the heat exchange assembly via one or more pumps, one or more motors, one or more impellers, one or more propellers, or a combination thereof. The heat exchange assembly may be corrosion resistant. The heat exchange assembly may be moisture resistant. The heat exchange assembly may include one or more baffling materials. The one or more baffling materials may decrease noise of the heat exchange assembly, absorb noise of the heat exchange assembly, or both. The heat exchange assembly may be isotropic such that the heat exchange assembly is substantially uniform in different directions. Conversely, the heat exchange assembly may be anisotropic such that the heat exchange assembly has different mechanical and/or material properties when measured in opposing directions. For example, the heat exchange assembly may be structurally rigid along a longitudinal axis yet be flexible along an axis transverse to the longitudinal axis.

The heat exchange assembly may include two or more panels. The panels may function to form an outer shell of the heat exchange assembly. The panels may function to form a housing around an inner portion of the heat exchange assembly. The panels may support the component being cooled or heated. The panels may be an initial point of contact between the component and the heat exchange assembly to transfer heat to or from the component to the heat exchange assembly. For example, a top panel of the heat exchange assembly may support and abut a bottom portion of a battery so that heat is initially transferred from the battery to the top panel or vice versa. The panels may preferably be structurally rigid. The panels may be flexible. The panels may be moisture resistant, corrosion resistant, anti-microbial, antifungal, or a combination thereof. For example, the panels may include one or more coatings to protect from galvanic or other types of corrosion. The panels may be permeable. The panels may include one or more holes, gaps, spaces, or a combination thereof to form a permeable layer. The panels may be substantially moisture resistant or airtight to prevent leakage of a coolant temperature control material flowing through an interior of the heat exchange assembly.

The panels may be any desired shape and material. The panels may have any desired thickness. The panels may have a thickness of less than 1mm, about 1 mm or more, about 2 mm or more or about 3 mm or more. The panels may have a thickness of about 6 mm or less, about 5 mm or less, or about 4 mm or less. The panels may be metallic. For example, the panels may be aluminum, iron, steel, copper, bronze, or a combination thereof. Alternatively, the panels may be polymeric. For example, the panels may be a polyamide material reinforced with glass fibers. The panels may be the same material or may have different materials. For example, a top and bottom panel may be metallic while one or more intermediate panels are a polyamide material. The panels may include one or bends, one or more arcuate portions, one or more linear segments, one or more curves, one or more projections, one or more cutouts, one or more notches, one or more fillets, one or more holes, or a combination thereof. The panels may be substantially planar. For example, the panels may be substantially sheet-like panels.

The panels may be positioned anywhere relative to each other. The panels are spaced apart from one another to form a desired gap between the panels. The gap may be selected based on an inner portion of the heat exchange assembly. For example, the gap between panels may form a cavity that is filled with one or more adhesives, one or more cores, or both. The panels may be positioned substantially coplanar to one another. For example, the panels may be joined along peripheral edges to form the overall dimensions of the heat exchange assembly. The panels may be positioned substantially parallel to each other, perpendicular to each other, or both. The panels are a plurality of panels. The heat exchange assembly includes two or more panels, or about three or more panels. The heat exchange assembly may include about six or less panels, about five or less panels, or about four or less panels. The panels may form one or more inner cavities of the heat exchange assembly. The one or more inner cavities may include one or more inner portions of the heat exchange assembly.

The panels may be spaced apart by one or more spacers. The spacers may function to maintain a desired gap between panels. The spacers may abut surfaces of one or more panels. The spacers may be compressible. The spacers may be structurally rigid. The spacers may be any size and shape. The spacers may have any desired length to form a desired gap. For example, the spacers may have a thickness of less than 1mm, about 1 mm or more, about 2 mm or more, or about 3 mm or more. The spacers may have a thickness of about 6 mm or less, about 5 mm or less, or about 4 mm or less. The spacers may be adhered to the panels. The spacers may be fixed to the panels using one or more fasteners. The spacers may be removable. The heat exchange assembly may include a plurality of spacers. The heat exchange assembly may be free of spacers. For example, a desired gap between panels may be maintained free of the spacers.

The panels may be connected to one or more side walls. The side walls may function to protect an inner portion of the heat exchange assembly. The side walls may abut peripheral edges of the panels. The side walls may be positioned within the gap between the panels. The side walls may form a desired height of the heat exchange panel. The side walls in conjunction with the panels may form an overall housing of the heat exchange assembly. The side walls may abut the component being cooled or heated. The side walls may be an initial point of contact between the heat exchange assembly and the component being cooled or heated. The side walls may be secured to the panels. The connection may be formed via one or more mechanical fasteners, one or more adhesives, one or more sealants or more than one of these. For example, the connection may be formed using one or more bolts, welding, or both. The side walls may be integrally formed with one or more of the panels. The side walls may have any desired size or shape. The side walls may be shaped substantially similar to the panels or may be different. The side walls may have a length substantially equal to a length of the panels. The side walls may form a sealed housing with the panels. For example, the side walls and the panels may create a hermetically sealed housing, a waterproof housing, a leakproof housing, or a combination thereof. The side walls may abut sides of a core.

The core may function to form an inner member of the heat exchange assembly. The core may function to divert, direct, or both a flow path of a temperature control material of the heat exchange assembly. The core may be positioned between the panels, side walls, or both. The core may be positioned within an inner cavity of the heat exchange assembly. The core may provide structural reinforcement to the heat exchange assembly. The core may be structurally rigid or may be flexible. The core may have a shape similar to the panels, side walls, or both. For example, the core and the panels, side walls, or both may be coextensive with one another. The core may be positioned between the panels to form a desired gap between the panels when the panels abut opposing surfaces of the core. The core may be a single, monolithically formed structure. Alternatively, the core may include one or more interconnected segments. The core may form a path for a coolant temperature control material. For example, the core may include one or more projections, one or more ribs, one or more channels, one or more cavities, one or more walls, one or more projections, one or more ribs, one or more recesses, or a combination thereof to direct temperature control material, deflect temperature control material, or both. The core may include one or more bends, one or more arcuate portions, one or more linear segments, one or more crossmembers, or a combination thereof. The core may be integrally (i.e., monolithically) formed with one or more of the panels. For example, the panels may include a plurality of projections or a plurality of ribs that, when joined to an opposing panel, form a plurality of channels in between the panels that may represent the core. Alternatively, the core may be a separate piece joined to the one or more panels during an assembly process. The core may be joined to the panels via one or more fasteners, one or more adhesives, one or more sealants or more than one of these.

The core may be any desired material. The core may be metallic, polymeric, or both. The core may be a corrugated material. The core may be extruded, pultruded, molded, stamped, embossed, cast or a combination thereof. The core may include one or more coatings. The one or more coatings may protect the core from corrosion, degradation, or both. The coatings may also aid adhesion, sealing, or both. The core may be permeable.

The core may include a plurality of ribs. The ribs may function to create an overall shape of the core. The ribs may function to provide structural integrity to the heat exchange assembly. The ribs may function to join the core to the panels, side walls, or both. The ribs may function to divert and direct a flow path of the coolant temperature control material. The ribs may be interconnected or spaced apart. The ribs may extend along a longitudinal axis of the core. The ribs may extend substantially parallel to the longitudinal axis of the core. The ribs may extend at any angle relative to the longitudinal axis of the core. For example, the ribs may extend substantially transverse to a length of the core. The ribs may create one or more spines extending along a length, a width, or both of the core. For example, the core may include a plurality of substantially uniform ribs extending substantially parallel to one another along a length of the core. The ribs may have a desired height. The ribs may have a height of about 1 mm or more, about 2 mm or more, or about 3 mm or more. The ribs may have a height of about 6 mm or less, about 5 mm or less, or about 4 mm or less. The ribs may have a length substantially equal to or less than a length of the core. The ribs may have a length substantially equal to or less than a width of the core. The ribs may be monolithically formed with the core. The ribs may be inserted into the core. For example, one or more rods may be inserted into the core.

An adhesive material is used in lieu of, or in conjunction with, the core. The adhesive material functions to secure the panels to one another. The adhesive material functions to create an inner portion between the panels that receives a coolant temperature control material. The adhesive material may create a desired gap between the panels. The adhesive material forms a path for the coolant temperature control material. The adhesive material is disposed on one or more surfaces of one or more panels. The adhesive material may create one or more voids, one or more cavities, or both between panels. The adhesive material joins the panels, and may join side walls, or both together to form a housing of the heat exchange assembly. For example, the adhesive material may be disposed on a mating surface of a top panel that abuts a mating surface of a bottom panel. The adhesive material may reinforce the heat exchange assembly. The adhesive material may baffle noise of the heat exchange assembly.

The adhesive material may be disposed on one or more panels to create any desired shape. The adhesive material may be disposed using one or more extrusion methods, such as a robotic applicator. The adhesive material may be disposed in a substantially uniform pattern. The adhesive material may be disposed in a substantially nonuniform pattern. The adhesive material may form one or more pathways for a coolant temperature control material. The adhesive material may be disposed along any portion of the panels. The adhesive material may be disposed along a portion or all of one or more panels. For example, the adhesive material may be disposed along substantially all of one or more panels and the adhesive material may be permeable so that a coolant temperature control material may flow through the adhesive material. Therefore, the adhesive material may form a pattern to direct a temperature control material, deflect a temperature control material, or both, and be used in lieu of the core. Alternatively, the adhesive material may form a portion of a flow path of the temperature control material in conjunction with the core.

The adhesive material may be any adhesive material that is compatible with a coolant/refrigerant composition. The adhesive material may be expandable upon activation. The adhesive material may be heat activated, activated by an activating agent, or both. The adhesive material is foamable. The adhesive material may be thermoactivated. The adhesive material may be curable. The adhesive material may be cured at a heightened temperature during a manufacturing process. Alternatively, the adhesive material may be cured at room temperature and not require a heightened temperature to cure. The adhesive may have a desired open time of up to one day. The adhesive may have a desired curing time. The curing time may be about 30 seconds or more, about 1 minute or more, or about 5 minutes or more. The curing time may be about 10 minutes or less, about 8 minutes or less, or about 6 minutes or less. The adhesive material may be dry to the touch or tacky prior to activation. The adhesive material may be room temperature stable. The adhesive material may include an adhesive polymeric material (e.g., epoxy resin or the like). The adhesive material may include one or more of the following: an epoxy resin; a flexibilizer; a phenoxy resin; an impact modifier; a blowing agent; a curing agent; a filler; or a combination thereof. The adhesive material is foamable and may expand to a volume greater than its volume in the unexpanded state (e.g., at least 5% greater, at least 20% greater, or even possibly at least 50% greater). The volumetric expansion may be about 400% or less, about 300% or less, or about 200% or less relative to the original unexpanded volume. The volumetric expansion may be about 50% or more, about 100% or more, or about 150% or more relative to the original unexpanded volume. Alternatively, the volume of the adhesive material may be less after activation due to curing (e.g., cross-linking) for foamed adhesive material. A plurality of adhesive materials may be disposed on one or more surfaces of the panels, side walls, core or more than one of these. Examples of adhesive materials may be found in U.S. Patent Nos. 6,846,559; 6,923,499; 7,125,461; 7,199,165; 7,521,093; 7,892,396; 8,236,128; 8,334,055; 8,475,694; and 8,702,889.

The adhesive material forms a plurality of channels. The channels receive and direct a coolant temperature control material of the heat exchange assembly. The channels function to create a flow path of the coolant temperature control material. The channels may be formed between the projections of the channel. The channels may extend substantially parallel to each other. The channels may extend substantially perpendicular to each other. The channels may extend at any angle relative to each other. The channels may be interconnected. The channels may intersect. The channels may be interconnected to form an overall temperature control material path. Alternatively, the channels may form a plurality of temperature control material paths so that the temperature control material may travel through a plurality of temperature control material paths substantially simultaneously.

The channels may be any size and shape. The channels may be U-shaped, V-shape, C-shaped, D-shaped, circular, square, rectangular, triangular, or a combination thereof. The channels may have any desired cross-sectional dimensions. For example, a width of the cross-section of the channels may be substantially equal to a gap between the panels. The channels may include one or more bends, one or more arcuate portions, one or more linear segments, or a combination thereof. The channels may include one or more openings, one or more holes, or both. For example, the channels may include one or more openings located near opposing ends of the channels. The channels may be substantially enclosed. The channels may be partially open.

The channels are fluidly connected to one or more reservoirs. The reservoirs function to at least temporarily store a coolant temperature control material. The reservoirs may be in fluid communication with the channels formed by the adhesive, the core, or both so that a coolant temperature control material may flow from the reservoir through the channels, or vice versa. The reservoirs may be positioned near opposing ends of the channels. The reservoirs may be secured to the panels, side walls, core, adhesive material, sealant, or a combination thereof. The reservoirs may be any size and shape. The reservoirs may be leakproof (e.g., hermetically sealed). The reservoirs may have a holding capacity sufficient to maintain a desired temperature control material level throughout the heat exchange assembly.

A plurality of reservoirs may be in communication with one another. The reservoirs may be connected directly or indirectly to one another. For example, the reservoirs may be indirectly connected to one another via the channels so that a coolant temperature control material may flow from a first reservoir through the channels and into a second reservoir. As such, the coolant temperature control material may then be recirculated via a pump, impeller, propeller, turbine, or a combination thereof to create a closed-loop system. Alternatively, the reservoirs may aid in creating an open-loop system free of recirculation of the coolant temperature control material.

The reservoirs may include one or more holes. The holes may function as an inlet for the coolant temperature control material, an outlet for the coolant temperature control material, or both. The holes may be positioned anywhere along the reservoirs. The holes may be any size and shape. The holes may allow a temperature control material to enter, exit, or both from a cavity within the reservoir. The holes may include a cover, lid, plug, or a combination thereof to prevent unwanted spilling of the coolant temperature control material while in use. The cover, lid, plug, or a combination thereof may be removable to fill the reservoirs. The holes may connect one or more tubes to the heat exchange assembly to create the open-loop system, closed-loop system, or both.

The reservoirs may include an opening. The opening may function to create the temperature control material communication between the reservoirs and an inner portion of the heat exchange assembly. For example, the coolant temperature control material may flow from the reservoir, through the opening, and into one or more channels of the heat exchange assembly. The opening may be any desired size and shape. The opening may be tapered or may maintain a uniform size. The opening may connect to the heat exchange assembly. For example, the opening may be received by a female portion of the heat exchange assembly. Alternatively, the reservoirs may be secured to the heat exchange assembly via one or more fasteners, one or more adhesives, or both so that the opening abuts the inner portion of the heat exchange assembly. The abutment between the inner portion of the heat exchange assembly and the opening may be free of voids and gaps to prevent leakage or unwanted discharge of the coolant temperature control material.

The opening may include one or more struts. The struts may function to structurally reinforce the opening. The struts may be structurally rigid. The struts may be positioned anywhere along the opening. The struts may extend between opposing walls of the opening. The struts may be any size and shape. The struts may be spaced apart a desired length. The structs may extend into the reservoir. The struts may align with one or more channels of the heat exchange panel. The struts may deflect the coolant temperature control material to decrease a flow rate of the coolant temperature control material entering the inner portion of the heat exchange assembly. The struts may be removable. The struts may be adjustable. The struts may be secured to the heat exchange assembly.

The heat exchange temperature control material may flow through the heat exchange assembly. The temperature control material may maintain a temperature of one or more components being cooled, a temperature of the heat exchange assembly, or both. The temperature control material may be a liquid, gas, or both. The temperature control material may be air. The temperature control material may be water, alcohol, or both. The temperature control material may be a glycol mixture. For example, the temperature control material may be a polyethylene glycol. The temperature control material may be a phase change material such that it does not flow but instead melts or solidifies at desired temperature range (most desirably ~25-30 °C for batteries). Upon melting, the phase change material may absorb heat from the battery. Then at lower temperatures the phase change material may re-solidify, helping to insulate the battery from cold. The temperature may be controlled by one or more heating elements located within one or more of the channel or reservoir or associated with assemble in some other way. The heating element may comprise one or more electrically resistive wires. The heating element may heat via an induction heating system.

The temperature control material may be propelled through the heat exchange assembly via one or more impellers, one or more propellers, one or more pumps, or a combination thereof. The temperature control material may have any desired flow rate, pressure, or both. The temperature control material may be in a closed-looped system, open-looped system, or both. The temperature control material may be recirculated. The temperature control material may be filtered during a recirculation process.

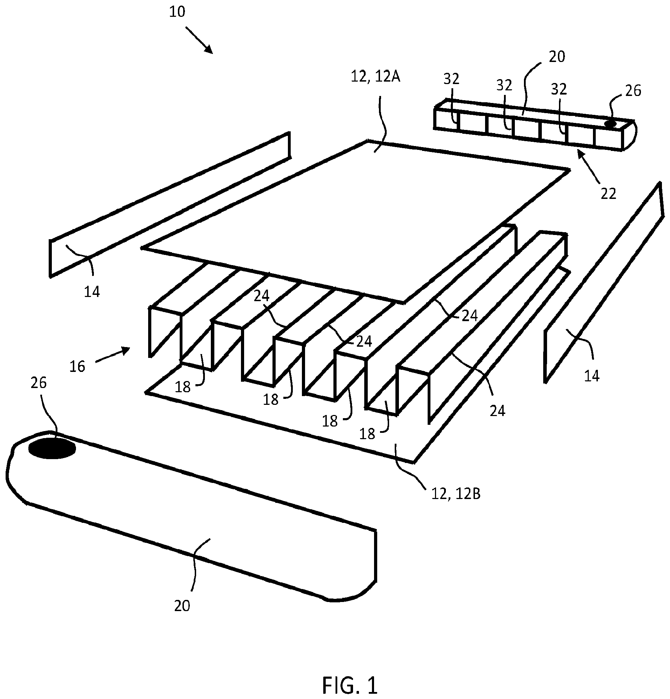

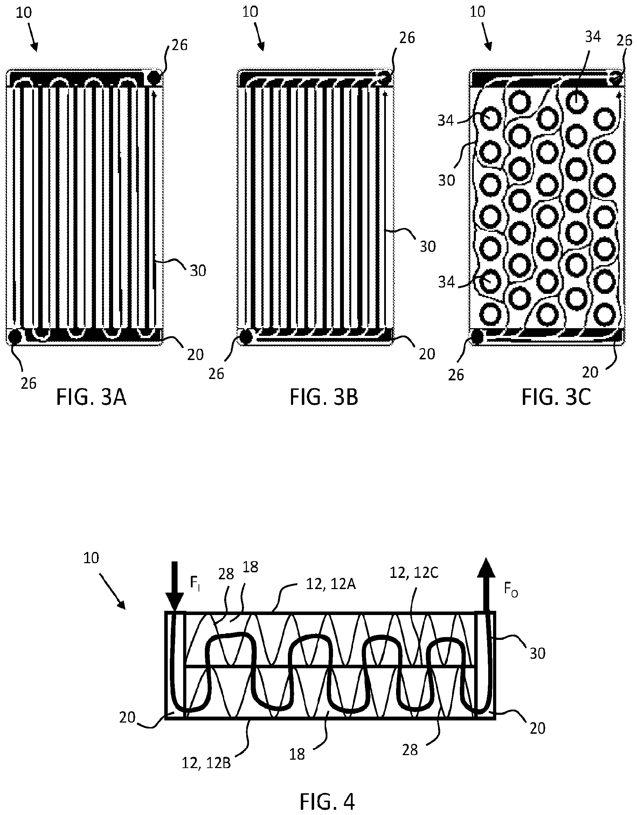

Turning now to the figures, FIG. 1 illustrates a perspective view of a heat exchange assembly 10. The heat exchange assembly 10 includes a plurality of panels 12 encasing a core 16. A top panel 16A and a bottom panel 16B are positioned on opposing surfaces of the core 16. Additionally, opposing side walls 14 abut sides of the core 16 so that the side walls 16 and the panels 12 form a housing for the core 16. The core 16 includes a plurality of projections 24 which may be ribs extending substantially along, or parallel to, a longitudinal axis of the core 16. The plurality of projections 24 form a plurality of channels 18 that may receive and direct a flow path of a temperature control material (see FIGS. 3 and 4). The heat exchange assembly 10 further includes opposing reservoirs 20 each having a hole 26 to receive the temperature control material, expel the temperature control material, or both. The reservoirs 20 each include an opening 22 having a plurality of reinforcing struts 32 that abut opposing ends of the core 16 so that the temperature control material may flow between the reservoirs 20 through the core 16.

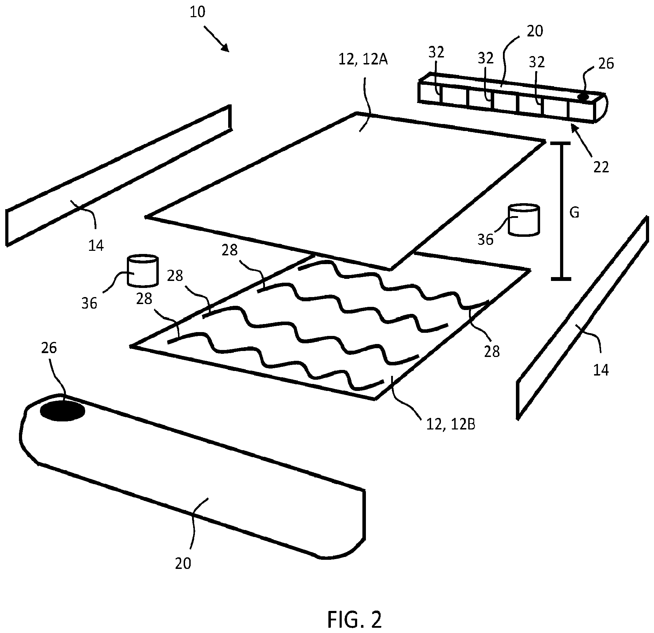

**FIG. 2** illustrates a perspective view of a heat exchange assembly 10. The heat exchange assembly 10 includes a plurality of panels 12. A top panel 16A, a bottom panel 16B, or both may include an adhesive material 28 disposed on one or more surfaces. The adhesive material 28 may be configured to form a certain shape, path, pattern, or a combination thereof to direct a flow path of a temperature control material. The adhesive material 28 forms a plurality of channels that direct the flow path of the temperature control material (see FIGS. 3 and 4). The adhesive material 28 may have a desired thickness so that, when the top panel 12A and the bottom panel 12B abut the adhesive material 28, a desired gap (G) is created between the panels 12 that substantially correlates to a thickness (i.e., a height) of the adhesive material 28. The gap (G) may be maintained via one or more spacers 36 disposed between the panels 12. The adhesive material 28 may be applied to the panels 12 having a desired height, may be cured to expand to a desired height, or both. Additionally, opposing side walls 14 abut edges of the panels 12 within the gap (G) so that the side walls 16 and the panels 12 form a housing around the adhesive material 28. The exchange assembly 10 further includes opposing reservoirs 20 each having a hole 26 to receive the temperature control material, expel the temperature control material, or both. The reservoirs 20 each include an opening 22 having a plurality of reinforcing struts 32 that abut opposing ends of the panels 12 so that the temperature control material may flow between the reservoirs 20 and through the pattern created by the adhesive material 28.

**FIG. 3A-3C** illustrate top views of a heat exchange assembly 10 with varying temperature control material flow paths. As illustrated, the heat exchange assembly 10 includes opposing reservoirs 20 each having a hole 26. The reservoirs 20 are positioned on opposing sides of the heat exchange assembly 10 so that a temperature control material 30 may flow between the reservoirs 20 and through the heat exchange assembly 10. As shown in FIGS. 1 and 2, the heat exchange assembly 10 may include a core, an adhesive material, or both that creates one or more channels, flow paths, projections 20, or a combination thereof to divert and determine a flow path of the temperature control material. As shown in FIG 3A, the temperature control material 30 may flow in a substantially looping path through channels of the heat exchange assembly 10. Additionally, as shown in FIG. 3B, the temperature control material 30 may have a plurality of temperature control material paths running substantially parallel to one another through a plurality of channels of the heat exchange assembly 10. Alternatively, or in addition, the temperature control material 30 may have a substantially random flow path around one or more projections of adhesive 34 of the heat exchange assembly 10, as shown in FIG. 3C.

**FIG. 4** illustrates a cross-sectional view of a heat exchange assembly 10. The heat exchange assembly 10 includes a plurality of panels 12 spaced apart by one or more adhesive materials 28. A top panel 12A and an intermediate panel 12C are spaced apart by an adhesive material 28, and similarly, the intermediate panel 12C and a bottom panel 12B are also spaced apart by an adhesive material 28. The adhesive material 28 forms a plurality of channels 18 so that a temperature control material 30 may flow through the channels. Additionally, one or more of the panels 12 may be permeable (e.g., the intermediate panel 12C) so that the temperature control material 30 may also flow through the panels 12. The heat exchange assembly 10 may further include opposing reservoirs 20. As illustrated, the temperature control material 30 may flow into a temperature control material inlet (Fₗ), through the heat exchange assembly 10, and out of a temperature control material outlet Fₒ. It should be noted that the temperature control material 30 may be recirculated to continuously flow in a desired path. The temperature control material may be recirculated via one or more pumps, one or more impellers, one or more propellers, or a combination thereof (not shown).

Unless stated otherwise, dimensions and geometries of the various structures depicted herein are not intended to be restrictive of the invention, and other dimensions or geometries are possible. Plural structural components can be provided by a single integrated structure. Alternatively, a single integrated structure might be divided into separate plural components. In addition, while a feature of the present invention may have been described in the context of only one of the illustrated embodiments, such feature may be combined with one or more other features of other embodiments, for any given application. It will also be appreciated from the above that the fabrication of the unique structures herein and the operation thereof also constitute methods in accordance with the present invention.

Unless otherwise stated, a teaching with the term "about" or "approximately" in combination with a numerical amount encompasses a teaching of the recited amount, as well as approximations of that recited amount. By way of example, a teaching of "about 100" encompasses a teaching of 100 +/- 15.

## Claims

1. A heat exchange assembly comprising:
(I) two or more panels;
(II) a plurality of channels formed between the two or more panels, the plurality of channels formed by a foamable adhesive material disposed in between the two or more channels ; and
(III) a reservoir located adjacent to the plurality of channels and configured to at least temporarily store a temperature control material selected from polyethylene glycol, air, refrigerant, water, alcohol, a phase change material, or a combination thereof,
wherein the plurality of channels are configured to direct a flow path of the temperature control material between the two or more panels;
and wherein the plurality of channels are providing structural rigidity to the assembly

2. The heat exchange assembly according to claim 1, wherein a first panel is metallic and a second panel is metallic or polymeric.

3. The heat exchange assembly according to any of the preceding claims, further comprising a plurality of side walls that abut terminal edges of the two or more panels to form a housing around the plurality of channels.

4. The heat exchange assembly according to any of the preceding claims, wherein the reservoir includes an opening that abuts the plurality of channels so that the flow path of the temperature control material moves from the reservoir, through the opening, and into the plurality of channels, or vice versa.

5. The heat exchange assembly according to any of the preceding claims, wherein the flow path of the temperature control material loops through the plurality of channels in a snake-like pattern.

6. The heat exchange assembly according to any of claims 1 through 5, wherein the flow path of the temperature control material flows through the plurality of channels in a substantially parallel and simultaneous manner.

7. The heat exchange assembly according to claim 1, wherein the two or more panels are spaced apart by a thickness of the adhesive material after expansion.

8. The heat exchange assembly according to any of the preceding claims, wherein the two or more panels include a coating to protect from galvanic or other type of corrosion.

9. The heat exchange assembly according to any of the preceding claims, wherein the two or more panels includes a top panel, a bottom panel, and an intermediate panel, and the plurality of channels is disposed between both the top panel and intermediate panel, and the intermediate panel and the bottom panel.

10. The heat exchange assembly according to any of the preceding claims, wherein at least one of the two or more panels is permeable.

11. The heat exchange assembly according to claim 1, wherein the adhesive material remains structurally intact between -40 °C and 80 °C.

12. The heat exchange assembly according to any of the preceding claims, wherein the plurality of channels have a height of more than 0.3mm.

13. The heat exchange assembly according to claim 4, wherein the opening includes one or more reinforcement struts that maintain a structure of the opening.

14. The heat exchange assembly of any of the preceding claims, wherein the assembly includes a heating element.

15. The heat exchange assembly of any of the preceding claims, wherein the assembly includes a heating element and the heating element comprises one or more resistive wires.

## Patentansprüche

1. Wärmetauschbaugruppe umfassend:
(I) zwei oder mehr Platten;
(II) eine Vielzahl von Kanälen, die zwischen den zwei oder mehr Platten gebildet sind, wobei die Vielzahl von Kanälen durch ein schäumbares Klebstoffmaterial gebildet sind, das zwischen den zwei oder mehr Kanälen angeordnet ist; und
(III) ein Reservoir, das benachbart zu der Vielzahl von Kanälen angeordnet ist und dafür gestaltet ist, ein Temperaturregelmaterial ausgewählt aus Polyethylenglycol, Luft, Kältemittel, Wasser, Alkohol, einem Phasenwechselmaterial oder einer Kombination davon wenigstens zeitweilig aufzubewahren,
wobei die Vielzahl von Kanälen dafür gestaltet ist, einen Flussweg des Temperaturregelmaterials zwischen den zwei oder mehr Platten zu führen;
und wobei die Vielzahl von Kanälen der Baugruppe Struktursteifigkeit verleiht.

2. Wärmetauschbaugruppe gemäß Anspruch 1, wobei eine erste Platte metallisch ist und eine zweite Platte metallisch oder polymer ist.

3. Wärmetauschbaugruppe gemäß einem der vorstehenden Ansprüche, ferner umfassend eine Vielzahl von Seitenwänden, die an Außenkanten der zwei oder mehr Platten angrenzen, um ein Gehäuse um die Vielzahl von Kanälen zu bilden.

4. Wärmetauschbaugruppe gemäß einem der vorstehenden Ansprüche, wobei das Reservoir eine Öffnung aufweist, die an die Vielzahl von Kanälen angrenzt, so dass der Flussweg des Temperaturregelmaterials aus dem Reservoir durch die Öffnung und in die Vielzahl von Kanälen oder umgekehrt verläuft.

5. Wärmetauschbaugruppe gemäß einem der vorstehenden Ansprüche, wobei der Flussweg des Temperaturregelmaterials eine Schleife mit einer schlangenartigen Struktur durch die Vielzahl von Kanälen bildet.

6. Wärmetauschbaugruppe gemäß einem der Ansprüche 1 bis 5, wobei der Flussweg des Temperaturregelmaterials auf eine im Wesentlichen parallele und gleichzeitige Weise durch die Vielzahl von Kanälen verläuft.

7. Wärmetauschbaugruppe gemäß Anspruch 1, wobei die zwei oder mehr Platten durch eine Dicke des Klebstoffmaterials nach Expansion getrennt sind.

8. Wärmetauschbaugruppe gemäß einem der vorstehenden Ansprüche, wobei die zwei oder mehr Platten eine Beschichtung zum Schutz vor galvanischer oder andersartiger Korrosion aufweist.

9. Wärmetauschbaugruppe gemäß einem der vorstehenden Ansprüche, wobei die zwei oder mehr Platten eine obere Platte, eine untere Platte und eine Zwischenplatte aufweisen und die Vielzahl von Kanälen zwischen sowohl der oberen Platte und der Zwischenplatte als auch der Zwischenplatte und der unteren Platte angeordnet ist.

10. Wärmetauschbaugruppe gemäß einem der vorstehenden Ansprüche, wobei wenigstens eine der zwei oder mehr Platten durchlässig ist.

11. Wärmetauschbaugruppe gemäß Anspruch 1, wobei das Klebstoffmaterial zwischen -40 °C und 80 °C strukturell intakt bleibt.

12. Wärmetauschbaugruppe gemäß einem der vorstehenden Ansprüche, wobei die Vielzahl von Kanälen eine Höhe von mehr als 0,3 mm aufweist.

13. Wärmetauschbaugruppe gemäß Anspruch 4, wobei die Öffnung eine oder mehrere Verstärkungsstreben aufweist, die eine Struktur der Öffnung aufrechthalten.

14. Wärmetauschbaugruppe gemäß einem der vorstehenden Ansprüche, wobei die Baugruppe ein Heizelement enthält.

15. Wärmetauschbaugruppe gemäß einem der vorstehenden Ansprüche, wobei die Baugruppe ein Heizelement enthält und das Heizelement einen oder mehrere Widerstandsdrähte umfasst.

## Revendications

1. Ensemble d'échange thermique comprenant :
(I) deux ou plus de deux panneaux ;
(II) une pluralité de canaux formés entre les deux ou plus de deux panneaux, la pluralité de canaux étant formée par un matériau adhésif expansible disposé entre les deux ou plus de deux canaux ; et
(III) un réservoir situé de manière adjacente à la pluralité de canaux et configuré pour stocker au moins temporairement un matériau de régulation de la température choisi parmi le polyéthylène glycol, l'air, un réfrigérant, l'eau, l'alcool, un matériau à changement de phase ou une combinaison de ceux-ci,
la pluralité de canaux étant configurée pour diriger un trajet d'écoulement du matériau de régulation de la température entre les deux ou plus de deux panneaux ;
et la pluralité de canaux fournissant une rigidité structurelle à l'ensemble.

2. Ensemble d'échange thermique selon la revendication 1, un premier panneau étant métallique et un deuxième panneau étant métallique ou polymère.

3. Ensemble d'échange thermique selon l'une quelconque des revendications précédentes, comprenant en outre une pluralité de parois latérales qui s'appuient sur les bords terminaux des deux ou plus de deux panneaux pour former un boîtier autour de la pluralité de canaux.

4. Ensemble d'échange thermique selon l'une quelconque des revendications précédentes, le réservoir comprenant une ouverture qui s'appuie sur la pluralité de canaux de sorte que le trajet d'écoulement du matériau de régulation de la température passe du réservoir, à travers l'ouverture et dans la pluralité de canaux, ou vice versa.

5. Ensemble d'échange thermique selon l'une quelconque des revendications précédentes, le trajet d'écoulement du matériau de régulation de la température circulant en boucle à travers la pluralité de canaux selon un schéma en forme de serpent.

6. Ensemble d'échange thermique selon l'une quelconque des revendications 1 à 5, le trajet d'écoulement du matériau de régulation de la température circulant à travers la pluralité de canaux de manière sensiblement parallèle et simultanée.

7. Ensemble d'échange thermique selon la revendication 1, les deux ou plus de deux panneaux étant espacés d'une épaisseur de matériau adhésif après expansion.

8. Ensemble d'échange thermique selon l'une quelconque des revendications précédentes, les deux ou plus de deux panneaux comprenant un revêtement pour protéger de la corrosion galvanique ou d'un autre type de corrosion.

9. Ensemble d'échange thermique selon l'une quelconque des revendications précédentes, les deux ou plus de deux panneaux comprenant un panneau supérieur, un panneau inférieur et un panneau intermédiaire, et la pluralité de canaux étant disposée entre le panneau supérieur et le panneau intermédiaire, et entre le panneau intermédiaire et le panneau inférieur.

10. Ensemble d'échange thermique selon l'une quelconque des revendications précédentes, au moins un des deux ou plus de deux panneaux étant perméable.

11. Ensemble d'échange thermique selon la revendication 1, le matériau adhésif restant structurellement intact entre -40 °C et 80 °C.

12. Ensemble d'échange thermique selon l'une quelconque des revendications précédentes, la pluralité de canaux ayant une hauteur supérieure à 0,3 mm.

13. Ensemble d'échange thermique selon la revendication 4, l'ouverture comprenant un ou plusieurs renforts qui maintiennent la structure de l'ouverture.

14. Ensemble d'échange thermique selon l'une quelconque des revendications précédentes, l'ensemble comprenant un élément chauffant.

15. Ensemble d'échange thermique selon l'une quelconque des revendications précédentes, l'ensemble comprenant un élément chauffant et l'élément chauffant comprenant un ou plusieurs fils résistifs.
